# EUROPEAN PATENT SPECIFICATION

(11) **EP 0 297 895 B1**
(45) Date of publication and mention of the grant of the patent: **16.10.1996**
(21) Application number: 88305994.1
(22) Date of filing: 30.06.1988
(51) Int. Cl.: G06F 9/46, G06F 9/44

(54) **Apparatus and method using lockout for synchronization of access to main memory signal groups in a multiprocessor data processing system**
Vorrichtung und Verfahren mit Benutzung von Lockout für Zugriffssynchronisation auf Hauptspeichersignalgruppen in einem Multiprozessordatenverarbeitungssystem
Dispositif et méthode utilisant exclusion pour synchroniser l'accès à des groupes de signaux de la mémoire principale dans un système multiprocesseur de traitement des données

(30) Priority: 01.07.1987 US 69380
(43) Date of publication of application: 04.01.1989
(73) Proprietor: DIGITAL EQUIPMENT CORPORATION, Maynard Massachusetts 01754-1418 (US)
(72) Inventor: Cutler, David N., Bellevue Washington 98004 (US); Orbits, David A., Redmond Washington 98052 (US); Bhandarkar, Dileep, Shrewsbury Massachusetts 01545 (US); Cardoza, Wayne, Merrimack New Hampshire 03054 (US); Witek, Richard T., Littleton Massachusetts 01460 (US)
(74) Representative: Goodman, Christopher

(56) References cited:
- EP-A- 0 121 700
- EP-A- 0 130 593
- EP-A- 0 211 384
- 'MC68020 32-BIT MICROPROCESSOR USER'S MANUAL, SECOND EDITION' 1985 , PRENTICE HALL, ENGLEWOOD CLIFFS, US
- WESCON TECHNICAL PAPERS. vol. 26, September 1982, NORTH HOLLYWOOD US pages 1 - 5; K. GUTTAG ET AL.: 'Macrostore firmware emulation as an alternative to co-processors'

## Description

### BACKGROUND OF THE INVENTION

### 1. Field of the Invention

This invention relates generally to data processing systems and, more particularly, to data processing systems in which a plurality of processing units store data elements in a common main memory unit.

### 2. Description of the Related Art

In data processing systems in which a plurality of data processing units share a main memory unit for storing data required by the processing unit, a control program is implemented to share equitably the resources including the main memory among a multiplicity of users while simultaneously maintaining the integrity of data elements from inadvertent or malicious compromise. The control program can be in simultaneous execution in a plurality of data processing units. Therefore, the control program must synchronize the access to the data elements that are used to control the allocation and protection of resources. A similar problem can be present for users of the data processing system if their programs are executed on several data processing units simultaneously, referred to as parallel processing or multithreading.

A need has therefore been felt for a flexible and efficient technique whereby changes in the data elements stored in main memory can be synchronized, thereby maintaining data integrity.

In EP-A-0130593 there is described an apparatus for allowing a first unit gaining access to a shareable resource, such as a memory, to lock the shareable resource so that no other unit attempting to lock the shareable resource may be permitted access thereto. The locking function is applied in all read-modify-write operations, and shared access is not permitted when data may be modified by the accessing unit.

EP-A-0121700 describes a storage serialization apparatus in a multiprocessor system which enables multiple processors to concurrently execute instructions which access storage keeping the amount of storage locked to a minimum (ie. one page).

### FEATURES OF THE INVENTION

It is an object of the present invention to provide an improved data processing unit.

It is a feature of the present invention to provide an improved technique for synchronizing changes to data elements in a data processing system.

It is another feature of the present invention to provide for a synchronized updating of a main memory data element with a single instruction.

It is yet another feature of the present invention to provide for saving the data element in the data processing unit before the data element is updated.

### SUMMARY OF THE INVENTION

The aforementioned and other features are accomplished, according to the present invention, by providing an instruction, hereinafter called the RMAQI (read, mask, add quadword interlocked) instruction that causes the main memory unit (or a portion thereof) to be interlocked, transfers the addressed data element to the data processing unit, combines the data element with the contents of a mask register, adds the result to the contents of an addend register, and returns the data element to the original main memory location, while saving the original data element in the data processing unit. The functionality of the instruction permits a preselected data element or group of data elements to be placed in the main memory unit and/or permits one or more data elements to be augmented (a value added thereto) in the main memory data in a manner that is synchronized with other data processing units attempting the same operation on the same data in the main memory unit.

These and other features of the present invention will be understood upon reading of the following description along with the drawings.

### BRIEF DESCRIPTION OF THE DRAWINGS

Figure 1A and Figure 1B are examples of data processing system implementations capable of using the present invention.

Figure 2 is an example of a central processing unit of a data processing unit capable of using the present invention.

Figure 3 is a diagrammatic illustration of the relationship of the data processing system operating modes.

Figure 4 illustrates the steps in transferring from the user or kernel mode to the EPICODE mode.

Figure 5 illustrates the operation of memory interlock mechanism.

Figure 6 illustrates the steps in executing the RMAQI instruction according to the present invention.

### DESCRIPTION OF THE PREFERRED EMBODIMENT

### 1. Detailed Description of the Figures

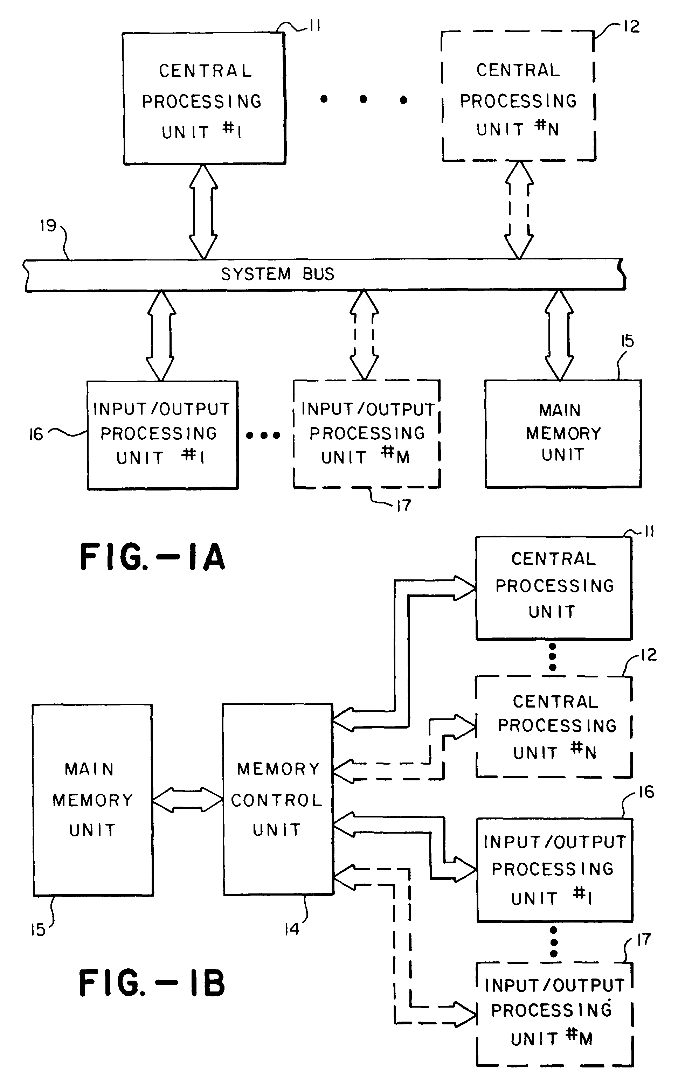

Referring now to Fig. 1A and Fig. 1B, two exemplary data processing system configurations capable of using the present invention are shown. In Fig. 1A, the central processing unit (#1) 11 is coupled to a system bus 19. Other central processing units (e.g., #N) 12 can also be coupled to the system. The central processing unit(s) 11 (through 12) process data according to the structure of the central processing unit(s) in conjunction with central processing unit control programs, the control programs consist of instructions resident in the main memory unit 15. The nonresident data and instructions are typically stored in the mass storage unit(s) and are transferred to and from the main memory unit 15 via the system bus 19. Input/output unit(s) {#1} 16 (through {#M} 17) couple devices such as mass memory storage units, user terminal devices and communication devices to the data processing system by means of the system bus 19. The mass storage units store the data and instructions required by the data processing unit(s). Sets of data and/or instructions, typically designated as pages of data and/or instructions, required for the operation of the central processing units 11 through 12, are transferred from the mass storage units, having relatively slow accessibility, to the main memory unit to which access by the central processing unit is relatively fast. The bus oriented system has an advantage in the relative ease to reconfigure the system but has the disadvantage that the each system component requires control apparatus to provide an interface with the system bus. Referring next to Fig. 1B, a data processing system is shown in which the central processing unit(s) 11 (through 12) and the input/output unit(s) 16 (through 17) are coupled to the main memory unit 15 through a memory control unit 14, the memory control unit 14 replacing the system bus 19 and the control function performed by individual data processing system components in the bus oriented data processing configuration shown in Fig. 1A. The memory control unit 14 provides a centralized control and monitoring of the transfer of data and instructions that can be more efficient than the bus oriented configuration of Fig. 1, but with the loss of flexibility.

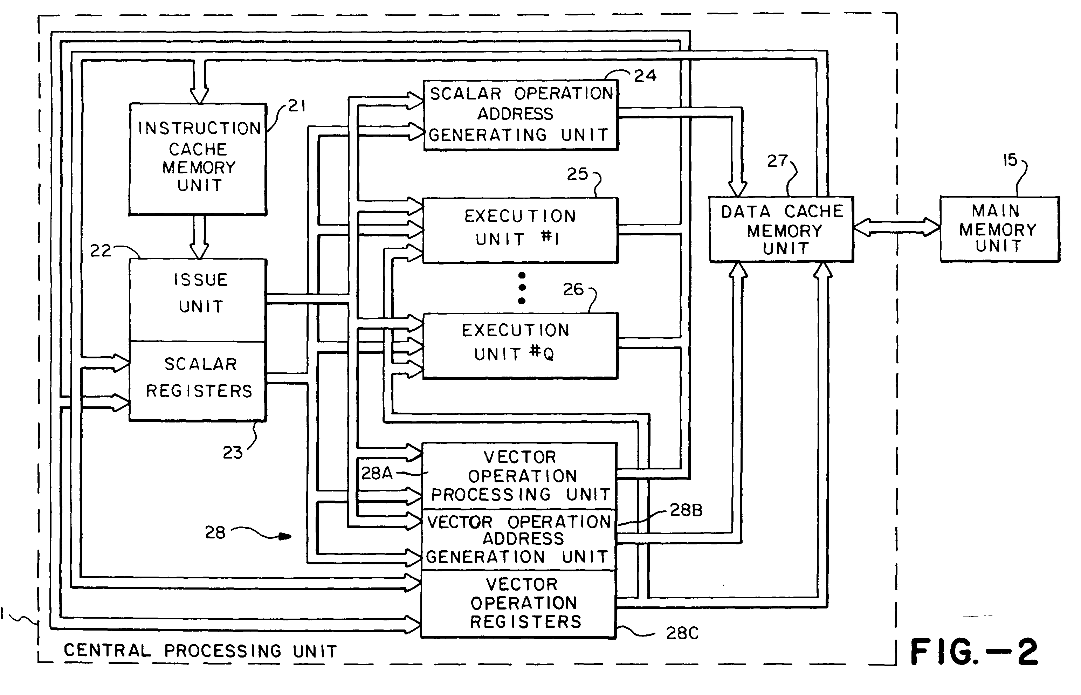

Referring next to Fig. 2, a block diagram of an exemplary central processing unit capable of effective utilization of the present invention is illustrated. The issue unit 22 is responsible for for providing (decoded) instructions to the plurality of specialized execution units comprising scalar operation address generation unit 24, at least one execution unit (#1) 25 (through execution unit {#Q} 26) and a vector operation unit 28, the vector operation unit 28 including vector operation processing unit 28A, vector operation address generation unit 28B and vector operation registers 28C. The data processed by the execution units are typically extracted from the scalar registers 23 or the vector registers 28C. The resulting data from the execution units are stored in the scalar registers 23, in the vector registers 28C or in the data cache memory unit 27. The data cache memory unit 27 can be viewed as a cache memory unit providing an interface between the main memory unit 15 and the central processing unit 11. (The data cache memory unit 27 is shown as being coupled directly to the main memory unit in Fig. 2. As illustrated in Fig. 1A and Fig. 1B, the actual coupling can include intervening data processing apparatus.) The issue unit 22 includes apparatus for determining which execution unit will process selected data and for determining when the selected execution unit is available for processing data. This latter feature includes ascertaining that the destination storage location will be available to store the processed data. The instruction cache memory unit 21 stores the instructions that are decoded and forwarded to the appropriate execution unit by the issue unit. The issue unit 22 has the apparatus to attempt to maximize the processing operations of the execution units. Thus, the issue unit 22 includes prefetch apparatus and algorithms to ensure that the appropriate instruction (including any branch instruction) is available to the issue unit 22 as needed. The plurality of execution units are, as indicated by the scalar operation address generation unit 24 and the vector operation unit 28, specialized processing devices for handling certain classes of processing operation. For example, an execution unit can be configured to handle floating point operations, or integer arithmetic operations, etc. The issue unit 22 has associated therewith scalar registers 23 that can store data required for the execution of the program or for providing a record of the data processing operation. For example, one register is the Program Counter register that stores the (virtual) address of the next instruction, in the executing program instruction sequence, to be processed. The scalar operation address generation unit 24 is used to convert virtual addresses to physical locations in the main memory unit 15. The issue unit 22 is also responsible for reordering the data from the execution units in the correct sequence when the execution units process instructions at different rates.

The vector operation unit 28 includes a vector operation processing unit 28A, a vector operation address generation unit 28B and vector operation registers 28C. The activity of the vector operation processing unit can control the distribution of the data to the execution units 24 through 26 and the execution of the instructions therein. According to another embodiment (not shown), execution units dedicated to execution of instructions by the vector operation unit 28 can be available in the data processing system. When the execution units are available for both vector and scalar operations, control is subject to the overall system control of the issue unit 22 that allocates the resources of the data processing unit.

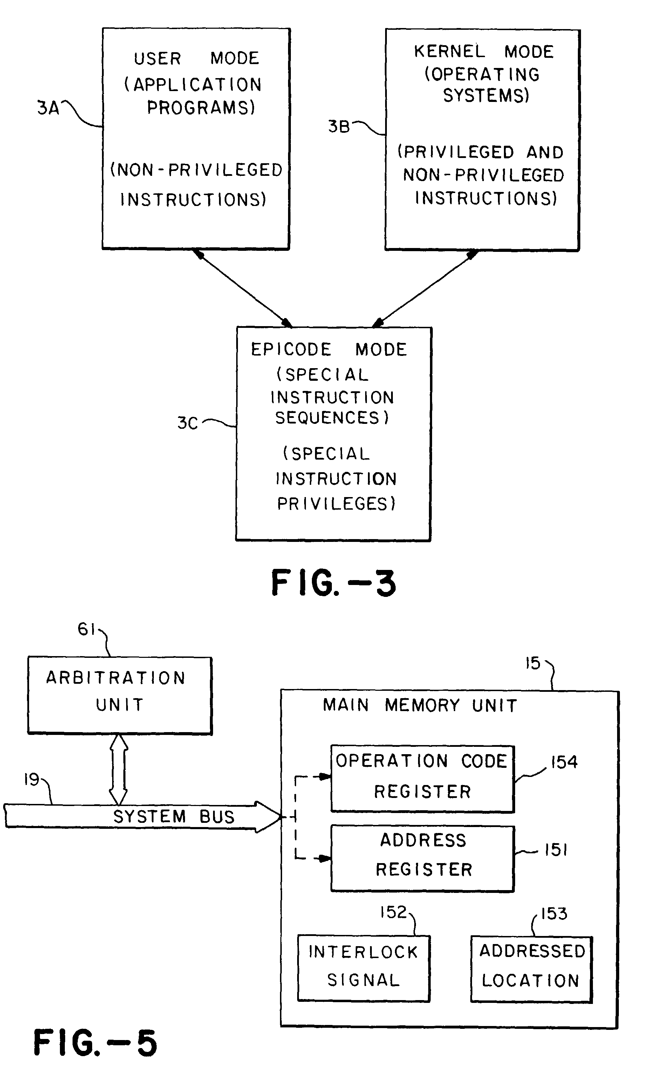

Referring next to Fig. 3, the relationship of the two typical operating system modes and the EPICODE mode is shown. The user mode 3A typically executes application programs that perform processing functions of immediate interest to the user. The user is provided with relatively complete control in order to obtain the desired processing capabilities, but is limited in such a manner as to preserve system integrity. The user is free to execute any instruction that does not compromise system integrity. These instructions are referred to as nonprivileged instructions. The kernel mode 3B is the mode in which the operating system executes instructions. The instructions associated with the kernel mode 3B are privileged and are not available to user programs because the misuse or malicious use of these instructions could result in program failure or otherwise compromise system integrity. The kernel mode can also execute all of the nonprivileged instructions. Separate from but available to both the user mode 3A and to the kernel mode 3B is the EPICODE mode 3C. This mode of data processing system operation is reserved for instruction sequences that should execute without interruption. This mode is provided with certain privileges and certain dedicated hardware implementing the strategy to ensure noninterruptable (atomic) execution of the appropriate instruction sequences.

Referring next to Fig. 4, the steps for entering the EPICODE mode from either of the operating modes are shown. An event 401, such as an interrupt, a hardware exception or an instruction in the EPICODE format communicates to the data processing system the requirement to enter the EPICODE mode. In step 402, the issue unit is prevented from issuing new instructions, but the instructions for which execution has begun are completed. The completion of currently executing instructions permits all hardware exceptions to be signaled prior to execution in the EPICODE mode. In step 403, the privilege to execute instructions reserved for the EPICODE mode is enabled. In step 404, the external interrupt signals are disabled and the virtual address mapping for instruction stream references is disabled in step 405. In step 406, any processor state that would be destroyed by the execution in the EPICODE mode is saved. For example, the contents of the Program Counter are saved in this step. Access to a special set of registers associated with the EPICODE mode is enabled in step 407. A new Program Counter address is formed by combining an address from a hardware register (called the EPICODE address register) with certain status signal flags in step 408. And in step 409, the sequence of ordinary and EPICODE instructions forming the addressed program are executed.

Referring to Fig. 5, a technique for providing a main memory unit interlock for a bus oriented system is shown. According to one embodiment, an arbitration unit 61 determines which of the central processing units can gain access to the system bus 19. When a central processing unit gains access to the system bus 19, an operation code, address, and optional data are transferred on the system bus 19 to the main memory unit 15. The main memory unit 15 receives this information and the address is entered in address register 151 and the operation code is entered in register 154. When the operation code entered in register 154 includes an interlock signal (and an interlock signal is not already present), then the main memory unit stores in register 152 an interlock bit and the identification of the data processing unit now having exclusive interlocked access to the main memory unit 15. Thereafter, even when a subsystem gains control of the system bus 19, attempts to access the main memory unit in an interlocked manner will not be completed. When the controlling central processing unit releases the interlock bit, then the other subsystems (central processing units or input/output units) can access the main memory unit in an interlocked manner. The setting of an interlock bit does not preclude other central data or input/output processing units from accessing the data element in the main memory unit in a noninterlocked manner. In some implementations, a plurality of interlock bits related to a subset of addresses in the main memory unit may be utilized. In this manner, only the memory locations associated with the interlock bit are inaccessible for interlocked access permitting the remaining portion of the main memory unit to be available for interlocked data processing operations. In the configuration in which a memory controller unit 14 is present (in Fig. 1B), the arbitration function, queueing function and access control are performed in this unit. In the preferred embodiment, the memory subsystem has four functions, a read (quadword) function, a write (quadword) function, an acquire lock function and a release lock function. In addition, in the preferred embodiment, the interlock does not prevent a read or write of the data, but does not permit another lock at that address by another data processing unit while the interlock is present.

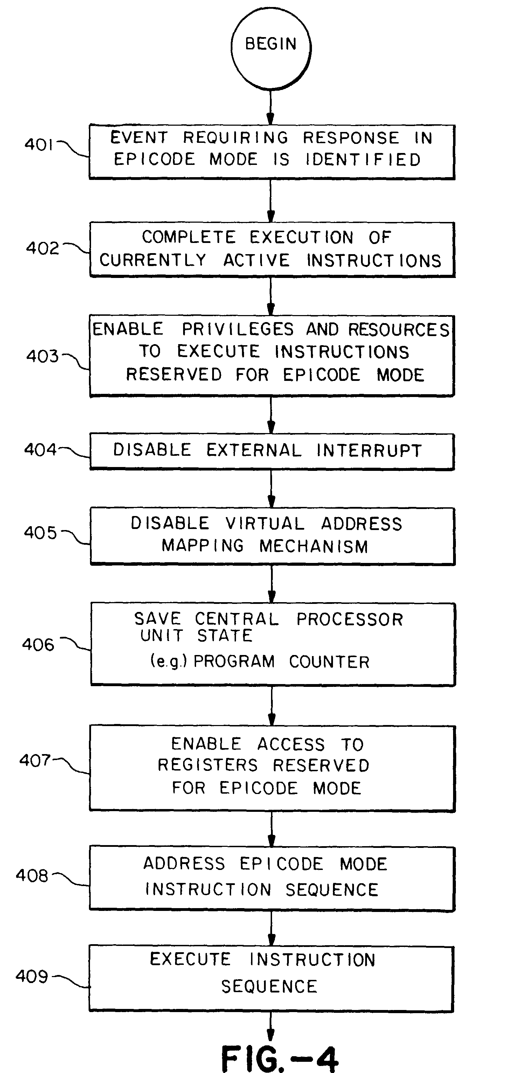

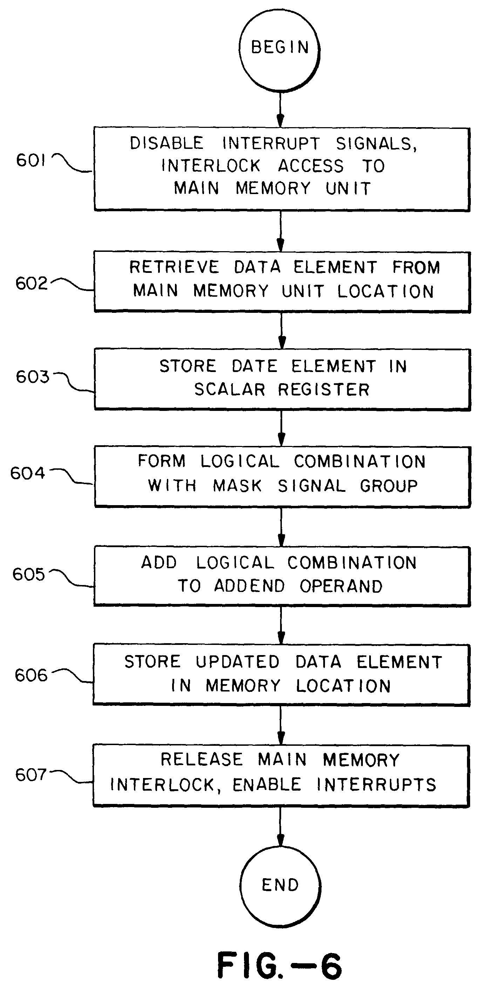

Referring next to Fig. 6, the steps implementing the RMAQI instruction are illustrated. In step 601, the data processing unit executing the instruction disables interrupt signals, acquires access to the main memory unit and initiates an interlocked access. In step 602, the data element that is the subject of the RMAQI instruction is transferred to the central processing unit and, in step 603, stored in one of the scalar registers 23. The data has a logical AND operation performed thereon with a mask signal group stored in another of scalar register 23 in step 604. In step 605, an operand from yet another scalar register 23 is added to the result of step 604. In step 606, the modified data is returned to the main memory location from which it was originally extracted and the main memory interlock is released and the interrupts enabled in step 607. The original data is still available in the first scalar register referred to in step 603.

### 2. Operation of the Preferred Embodiment

The central processing unit having pipelined execution units of Fig. 2 was implemented in the preferred embodiment subject to several constraints, however, other design implementations can utilize the present invention. The central processing unit includes a plurality of execution units, each execution unit adapted to execute a class of instructions. By way of example, one execution unit, the scalar address generating unit 24, controls the transfer of the logic signal groups between the central processing unit and the main memory unit, i.e., executes the scalar load/store instructions. One execution unit is adapted to execute data shifting operations, one execution unit for floating point add/subtract operations, one execution unit is adapted for integer and floating point multiply operations and one execution unit is adapted for integer and floating point divide operations. The specialized execution units can be, but are not necessarily implemented in a pipelined configuration. The other features of the central processing unit are the following. The instruction in the currently executing sequence of instructions is transferred to the issue unit 22 from the instruction cache memory unit 21. In the issue unit, the instruction is broken down into its constituent parts and data-dependent control signals and address signals are generated therefrom. However, before an instruction can begin execution (i.e., be issued), several constraints must be satisfied. All source and destination registers for the instruction must be available, i.e., no write operations to a needed register can be outstanding. The register write path must be available at the future cycle in which this instruction will store the processed quantity. The execution unit to be required for processing the instruction during the execution must be available to perform the operation. With respect to the vector operation unit, a vector operation reserves an execution unit for the duration of the vector operation. When a memory load/store instruction experiences a cache memory unit miss, the load/store unit busy flag will cause the subsequent load/store instructions to be delayed until the cache memory miss response is complete. When an instruction does issue, the destination register and the write path cycle for the result are reserved. During operand set-up, all instruction-independent register addresses are generated, operands are read and stored, and data-dependent control signals are generated. The instruction operands and control signals are passed to the associated execution unit for execution. The result generated by the execution unit is stored in the register files or in the data cache memory unit 15 as appropriate. Once an instruction issues, the result of the processing may not be available for several machine cycles. Meanwhile, in the next machine cycle, the next instruction can be decoded and can be issued when the requisite issue conditions are satisfied. Thus, the instructions are decoded and issued in the normal instruction sequence, but the results can be stored in a different order because of the of the varying instruction execution times of the execution units. This out of order storing complicates the exception handling and the retry of failing instructions. However, these events are relatively rare and the out of order storing provides execution and hardware advantages.

The data processing system described above is typical and can be implemented in a multiplicity of ways. In particular, microcoding techniques are optional in implementing such a structure. When microcoding techniques are not employed, many requisite functions of the data processing system require complex sequencing, but none-the-less must be performed atomically to other activity in the central processing unit. Some examples of such functions include:
I. Interrupt and exception dispatching,
2. Memory management control functions such as translation buffer fill,
3. Instructions that require complex sequencing such as the Return from Exception or Interrupt (REI) instruction,
4. Instructions that require controlled access to processor resources such as instructions that result in memory unit interlock,
5. Instructions that require an architected interface across all implementations for software compatibility, but whose physical implementation may vary widely between implementations. Examples include the Return from Exception and Interrupt and the Move To/From Processor Register.

The present invention implements a mechanism whereby the change of data elements is synchronized for a plurality of programs by an instruction that 1. interlocks access to the memory, 2. reads the logic signal group in the designated memory location (i.e. the address can be either the physical address or the virtual address in the preferred embodiment), 3. saves the value from the designated memory location, 4. forms the logical product (i.e., the AND function) of the data elements from the designate memory location with a mask operand, 5. adds the logical product resulting from the operation to an addend operand, 6. writes the resultant sum back to the designated memory location and 7. releases the interlock. This instruction provides that no other central processing unit or supplementary processor (e.g., an input/output processor) in a multiprocessor system can simultaneously be updating the same memory location by means of another interlock and update instruction. The instruction and apparatus described herein can be used to implement the so-called spin locks, test and set operations, loop iteration induction variable assignment, reference counts on shared objects and other operations requiring multiprocessor synchronization. With the use of an EPICODE mode, or where available, a microcoded implementation, this complex sequence of instructions can be implemented in an atomic fashion. In addition, by executing the instruction in EPICODE mode, additional registers are available and certain events are disabled from interrupting execution of the instruction. It will be clear that although the RMAQI instruction is identified with a quadword data element at the virtual address identified by the instruction signal, data elements of any size can utilize the technique of the present invention. In the preferred embodiment, for example, a RMALI instruction is provided in which the data processed by the instruction is a longword at the virtual address identified by the instruction. In addition, the preferred embodiment includes a RMAQIP instruction, the instruction identifying a physical address. All the instructions are executed in the EPICODE mode.

The foregoing description is included to illustrate the operation of the preferred embodiment and is not meant to limit the scope of the invention. The scope of the invention is to be limited only by the following claims.

## Claims

1. Apparatus for modifying data elements in main memory (15) locations of a data processing system having a plurality of central processing units (11,12), each of said memory locations being either in a locked condition or an unlocked condition, comprising:
a) means (21) for providing to each one of said central processing units (11) a plurality of instructions for execution, at least one of said instructions being an interlock instruction, each of said plurality of instructions causing the central processing unit that executes said instruction to transfer one of said data elements from one of said main memory (15) locations to said central processing unit (11), modify said data element, and transfer said modified data element back to said main memory location;
b) interlock means (152) responsive to execution of each one of said instructions by one of said central processing units for: 1) granting said one central processing unit (11) interlock access to one (153) of said main memory locations by placing at least said one main memory location (153) in said locked condition if said executed instruction is an interlock instruction and said one main memory location is in said unlocked condition, 2) denying said one central processing unit access to one of said main memory locations if said executed instruction is an interlock instruction and said one main memory location is in said locked condition, and 3) granting even if said main memory location is in a locked condition said one central processing unit non-interlock access to said one main memory location without placing said one memory location in said locked condition if said executed instruction is not an interlock instruction;
c) transfer means (19) for transferring said data element from said one main memory location (153) to said one central processing unit (11) that executes said instruction;
d) processing means (25,26) for performing said modifying of said data element in response to said instruction executed by said one central processing unit;
e) said transfer means (19) transferring said modified data element from said one central processing unit to said one main memory location; and
f) if said executed instruction is an interlock instruction, said interlock means (152) placing said one main memory location (153) in said unlocked condition after said transfer of said modified data element to said one main memory location by said central processing unit that executed the interlock instruction.

2. The data element modifying apparatus of claim 1 wherein said one central processing unit (11) is capable of operating in one of a plurality of privileged operating modes (3B,3C) and said one central processing unit operates in one of said privileged modes of operation in response to selected instructions executed by one of said central processing units.

3. The data element modifying apparatus of claim 1 wherein a second central processing unit (12) can have noninterlocked access to said main memory location (153) when interlocked access is not permitted.

4. The data element modifying apparatus of claim 1 wherein said at least one interlock instruction identifies a data element in said main memory location, said processing means modifying said data element in response to said interlock instruction.

5. The apparatus of claim 1 wherein said processing means comprises: first storage means for storing said data element to be modified in said one central processing unit;
logical means for forming a logical product of said data element and contents of a first register preselected by said one central processing unit to form a combined data element; and
adding means for forming said modified data element by adding to said combined data element a signal group in a second register preselected by said one central processing unit.

6. A method of modifying a data element (153) in a main memory unit (15) of a data processing system, said main memory unit having locations, said locations being either in a locked condition or an unlocked condition, said data processing system having a plurality of central processing units (11,12) and said main memory unit (15), comprising the steps of:
a) providing to each one of said central processing units a plurality of instructions for execution, at least one of said instructions being an interlock instruction, execution of each of said plurality of instructions causing the central processing unit that executes said instruction to transfer one of said data elements from a location in said main memory unit to said central processing unit, modify said data element, and transfer said modified data element back to said main memory location;
b) responding to each one of said instructions executed by one of said central processing units by: 1) granting (601) said one central processing unit (11) interlock access to said main memory location (153) by placing said main memory location in said locked condition if said executed instruction is an interlock instruction and said main memory location is in said unlocked condition, 2) denying said one central processing unit access to said main memory location if said executed instruction is an interlock instruction and said main memory location is in said locked condition, 3) granting even if said main memory is in a locked condition said one central processing unit noninterlocked access to said main memory location without placing said one memory location in said locked condition if said executed instruction is not an interlock instruction, and 4) causing said data element to be transferred (602) from said main memory location to said one central processing unit to be modified if said one central processing unit has been granted access to said main memory location;
said one central processing unit further responding to said executed instruction by transferring (606) said modified data element from said one central processing unit to said main memory location, and, if said executed instruction is an interlock instruction, placing (607) said main memory location (153) in said unlocked condition; and
c) executing said instruction by said one central processing unit without interruption from another of said central processing units.

7. The method of claim 6, said data processing system being capable of operating in one of a plurality of operating modes (3A-3C), comprising the step of providing said data processing system with a mode of operation (3C) wherein said one central processing unit (11) can execute said instruction without interruption from another of said central processing units.

8. The method of claim 7 wherein execution of said modifying step by said one central processing unit (11) further includes the steps of: forming (604) a logical product of said data element and contents of a mask register to form an intermediate data element; and adding (605) an operand from a register selected from said main memory location (153) by said one central processing unit (11) in response to said executed instructions to said intermediate data element.

9. The method of claim 8 wherein said at least one interlock instruction comprises constituent instructions and further comprising the step of sorting said constituent instructions of said interlock instruction in reserved main memory locations.

10. The method of claim 6 wherein the modification of said data element includes: storing (603) said data element in said one central processing unit (11); forming (604) a logical product of said data element and contents of a first register preselected by said one central processing unit to form a combined data element; and adding (605) a data signal group from a second register preselected by said one central processing unit to said combined data element to form said modified data element.

11. A data processing system including at least one main memory unit (15) and a plurality of data processing units (11,12) comprising:
a) means (21) for providing to each one of said data processing units a plurality of sequences of instructions; and
b) control means (22) for executing one of said instruction sequences in response to a predetermined instruction from one of said data processing units (11), wherein,
1) if said predetermined instruction is an interlock instruction and said main memory unit (15) is not interlocked, said one data processing unit (11): interlocks said main memory unit and prevents another one of said data processing units from interlocking said main memory unit, modifies a data element in said main memory unit, and releases said main memory unit interlock;
2) if said predetermined instruction is an interlock instruction and said main memory unit is interlocked, said one data processing unit: is denied access to said main memory; and
3) if said predetermined instruction is not an interlock instruction and even if said main memory unit is interlocked, said one data processing unit modifies a data element in said main memory unit without interlocking said main memory unit.

12. The data processing system in claim 11, wherein said predetermined instruction is a modify instruction, and wherein said plurality of sequences of instructions are stored in predetermined locations in said at least one main memory unit for execution, and wherein said execution of one of said instruction sequences is execution without interruption from another of said data processing units.

13. The apparatus of claim 12 wherein, if said modify instruction is an interlock instruction, said data processor (11) modifies said data element by logically combining said data element with a mask signal stored in a register of said one data processing unit.

14. The data processing system of claim 12 wherein said data processing unit (11) executes said instruction sequences in a mode of operation (3C) different from a user mode (3A) and a kernel mode (3B).

15. The data processing system of claim 14 wherein said data processing unit (11) disables (601) interrupt signals from others of said data processing units when said data processing unit is in said mode.

16. The data processing system of claim 14 wherein said data element (153) is stored in a central processing unit executing said one sequence of instructions after said data element has been modified.

17. The data processing system in claim 11, wherein said plurality of data processing units (11,12) comprise a plurality of central processing units, wherein said at least one main memory unit (15) is a plurality of main memory units, and wherein each one of said central processing unit further comprises:
a) register means connected to each of said central processing units for receiving data elements from one of said main memory units and for storing said data elements therein;
b) transfer means (19) connected to each of said central processing units for transferring a data element between one of said main memory units and said register means of one of said central processing units;
c) combining means for logically combining said transferred data element stored in said register means with a mask signal group stored in a second register means of said one central processing unit to form a modified data element; and
d) interlock means associated with each of said main memory units for controlling interlock access to at least one data element; and
wherein said control means includes execution means for executing said predetermined instruction included in said plurality of sequences of instructions provided for each of said central processing units and that includes an interlock instruction and a second instruction, said one central processing unit selecting between said interlock instruction and said second instruction;
wherein if said predetermined instruction is an interlock instruction and said data element is not interlocked, execution of said interlock instruction: causing said interlock means to grant said one central processing unit interlock access to said data element, interlocking said data element, preventing interlock access to said data element by another of said central processing units when no other of said central processing units has interlock access to said data element, and when said one central processing unit has been granted interlock access modifying said data element in said main memory unit and releasing said main memory unit from interlock; said modifying and releasing further comprising:
1) causing said transfer means to transfer said data element to said register means of said one central processing unit, 2) causing said combining means to provide a modified data element, 3) causing said modified data element to replace said data element in said main memory unit, and 4) causing said interlock means to permit interlocked access to said modified data element when said modified data element has replaced said data element in said main memory unit;
wherein if said predetermined instruction is an interlock instruction and said data element in said main memory unit is interlocked, said execution of said interlock instruction to deny said access by said central processing unit to said main memory further comprising: causing said interlock means to deny said one central processing unit interlock access to said data element when another of said central processing units has interlock access to said data element; and
wherein if said predetermined instruction is said second instruction, said execution of said second instruction causing said modifying of said data element in said main memory unit without interlocking said main memory unit further comprising: 1) causing said interlock means to grant said one central processing unit noninterlock access to said data element,
2) causing said transfer means to transfer said data element to said register means of said one central processing unit, 3) causing said combining means to provide a modified data element, and 4) causing said modified data element to replace said data element in said main memory unit.

18. The data processing system of claim 16 wherein said one central processing unit (11) executes said selected instruction without interruption from another of said central processing units.

19. The data processing unit of claim 18 wherein said identified data element remains stored in said register means of said one central processing unit after said modified identified data element has been stored in said main memory unit.

20. The data processing system of claim 19 wherein said identified data element in said register means of said central processing unit can be accessed by another of said central processing units in a noninterlocked fashion.

21. The data processing system of claim 18 wherein each of said central processing units (11,12) executes a set of instructions, said set including a group of privileged instructions and a group of nonprivileged instructions, and each of said central processing units having a first mode of operation (3A) for executing said nonprivileged instructions, a second mode of operation (3B) for executing said privileged and said nonprivileged instructions, and a third mode of operation (3C) for executing predefined sequences of instructions implementing predefined said privileged and said nonprivileged instructions, said interlock instruction being a predefined instruction.

22. The data processing unit of claim 21 wherein said central processing unit (11) enters said third mode of operation (3C) in response to a mode signal after said central processing unit completes currently executing instructions and disables interrupt signals from other of said central processing units.

23. The data processing system of claim 17 wherein said combining means includes apparatus for adding said identified data element to an operand stored in said register means.

24. The data processing system of claim 18 wherein said selected instruction identifies at least one mask signal in said mask signal group from a register selected from said main memory unit by said central processing unit in response to said selected instruction, and
said selected instructions further identifies an operand signal group from a register selected from said main memory unit by said central processing unit in response to said selected instruction,
said combining means logically combining said identified mask signal with said identified data element and adding identified said operand signal group to said identified data element.

25. The data processing system of claim 17 wherein said identified data element is used to synchronize said central processing units.

## Patentansprüche

1. Vorrichtung zum Modifizieren von Datenelementen in Speicherstellen eines Hauptspeichers (15) eines Datenverarbeitungssystems mit einer Vielzahl von Zentralrecheneinheiten (11, 12), wobei sich jede der Speicherstellen entweder in einem gesperrten Zustand oder in einem nicht-gesperrten Zustand befindet, mit:
a) einer Einrichtung (21) zum Zuführen einer Vielzahl von auszuführenden Anweisungen zu jeder der Zentralrecheneinheiten (11), wobei zumindest eine der Anweisungen eine Blockieranweisung ist, wobei jede der Vielzahl von Anweisungen die die Anweisung ausführende Zentralrecheneinheit veranlaßt, eines der Datenelemente aus einer der Speicherstellen des Hauptspeichers (15) zu der Zentralrecheneinheit (11) zu übertragen, das Datenelement zu modifizieren und das modifizierte Datenelement zurück zu der Speicherstelle des Hauptspeichers zu übertragen;
b) einer Blockiereinrichtung (152), die auf die Ausführung jeder der Anweisungen durch eine der Zentralrecheneinheiten anspricht zum: 1) Gewähren eines Blockierzugriffs für eine Zentralrecheneinheit (11) auf eine (153) der Speicherstellen des Hauptspeichers durch Versetzen zumindest einer Hauptspeicherstelle (153) in den gesperrten Zustand, wenn die ausgeführte Anweisung eine Blockieranweisung ist und sich die eine Hauptspeicherstelle in dem nicht-gesperrten Zustand befindet, 2) Verweigern des Zugriffs für die eine Zentralrecheneinheit auf die eine der Hauptspeicherstellen, wenn die ausgeführte Anweisung eine Blockieranweisung ist und sich die eine Hauptspeicherstelle in dem gesperrten Zustand befindet, und 3) Gewähren - selbst wenn sich die Hauptspeicherstelle in einen gesperrten Zustand befindet -eines Nicht-Blockierzugriffs für die eine Zentralrecheneinheit auf die eine Hauptspeicherstelle, ohne die eine Speicherstelle in den gesperrten Zustand zu versetzen, wenn die ausgeführte Anweisung keine Blockieranweisung ist;
c) einer Übertragungseinrichtung (19) zum Übertragen des Datenelements von der einen Hauptspeicherstelle (153) zu der einen Zentralrecheneinheit (11), die die Anweisung ausführt;
d) einer Verarbeitungseinrichtung (25, 26) zum Durchführen des Modifizierens des Datenelements in Abhängigkeit von der durch die eine Zentralrecheneinheit ausgeführten Anweisung;
e) einer Übertragungseinrichtung (19), die das modifizierte Datenelement von der einen Zentralrecheneinheit zu der einen Hauptspeicherstelle überträgt; und
f) wobei die Blockiereinrichtung (152), wenn die ausgeführte Anweisung eine Blockieranweisung ist, nach der Übertragung des modifizierten Datenelements zu der einen Hauptspeicherstelle durch die Zentralrecheneinheit, die die Blockieranweisung ausführte, die eine Hauptspeicherstelle (153) in den nicht-gesperrten Zustand versetzt.

2. Datenelement-Modifizierungsvorrichtung nach Anspruch 1, bei der die eine Zentralrecheneinheit (11) in einer aus einer Vielzahl von privilegierten Betriebsmodi (3B, 3C) arbeiten kann und die eine Zentralrecheneinheit in Abhängigkeit von den durch eine der Zentralrecheneinheiten ausgeführten ausgewählten Anweisungen in einer der privilegierten Betriebsmodi arbeitet.

3. Datenelement-Modifizierungsvorrichtung nach Anspruch 1, bei der eine zweite Zentralrecheneinheit (12) einen nicht-blockierten Zugriff auf die Hauptspeicherstelle (153) haben kann, wenn ein blockierter Zugriff nicht gestattet ist.

4. Datenelement-Modifizierungsvorrichtung nach Anspruch 1, bei der die zumindest eine Blockieranweisung ein Datenelement in der Hauptspeicherstelle identifiziert, wobei die Verarbeitungseinrichtung das Datenelement in Abhängigkeit von der Blockieranweisung modifiziert.

5. Vorrichtung nach Anspruch 1, bei der die Verarbeitungseinrichtung aufweist:
eine erste Speichereinrichtung zum Speichern des zu modifizierenden Datenelements in der einen Zentralrecheneinheit;
eine Logikeinrichtung zum Bilden eines logischen Produkts des Datenelements und des Inhalts eines von der einen Zentralrecheneinheit vorgewählten ersten Registers, um ein kombiniertes Datenelement zu bilden; und
eine Addiereinrichtung zum Bilden des modifizierten Datenelements durch Addieren einer Signalgruppe in einem von der einen Zentralrecheneinheit vorgewählten zweiten Register zu dem kombinierten Datenelement.

6. Verfahren zum Modifizieren eines Datenelements (153) in einer Hauptspeichereinheit (15) eines Datenverarbeitungssystems, wobei die Hauptspeichereinheit Speicherstellen aufweist, die sich entweder in einem gesperrten Zustand oder einem nicht-gesperrten Zustand befinden, wobei das Datenverarbeitungssystem eine Vielzahl von Zentralrecheneinheiten (11, 12) und die Hauptspeichereinheit (15) aufweist, das folgende Schritte umfaßt:
a) Zuführen einer Vielzahl von auszuführenden Anweisungen zu jeder der Zentralrecheneinheiten, wobei zumindest eine der Anweisungen eine Blockieranweisung ist, wobei die Ausführung jeder der Vielzahl von Anweisungen die die Anweisung ausführende Zentralrecheneinheit veranlaßt, eines der Datenelemente von einer Speicherstelle in der Hauptspeichereinheit zu der Zentralrecheneinheit zu übertragen, das Datenelement zu modifizieren und das modifizierte Datenelement zurück zu der Hauptspeicherstelle zu übertragen;
b) Antworten auf jede der von einer der Zentralrecheneinheiten ausgeführten Anweisungen durch: 1) Gewähren (601) eines Blockierzugriffs für die eine Zentralrecheneinheit (11) auf die Hauptspeicherstelle (153) durch Versetzen der Hauptspeicherstelle in den gesperrten Zustand, wenn die ausgeführte Anweisung eine Blockieranweisung ist und sich die Hauptspeicherstelle in dem nicht-gesperrten Zustand befindet, 2) Verweigern des Zugriffs für die eine Zentralrecheneinheit auf die Hauptspeicherstelle, wenn die ausgeführte Anweisung eine Blockieranweisung ist und sich die Hauptspeicherstelle in dem gesperrten Zustand befindet, 3) Gewähren - selbst wenn sich der Hauptspeicher in einem gesperrten Zustand befindet eines nicht-blockierten Zugriffs für die eine Zentralrecheneinheit auf die Hauptspeicherstelle, ohne die eine Speicherstelle in den gesperrten Zustand zu versetzen, wenn die ausgeführte Anweisung keine Blockieranweisung ist, und 4) Veranlassen, daß das von der Hauptspeicherstelle zu der einen Zentralrecheneinheit zu übertragende (602) Datenelement modifiziert wird, wenn der einen Zentralrecheneinheit Zugriff auf die Hauptspeicherstelle gewährt wurde;
wobei die eine Zentralrecheneinheit des weiteren auf die ausgeführte Anweisung durch Übertragen (606) des modifizierten Datenelements von der einen Zentralrecheneinheit zu der Hauptspeicherstelle antwortet, und, wenn die ausgeführte Anweisung eine Blockieranweisung ist, die Hauptspeicherstelle (153) in den nicht-gesperrten Zustand versetzt (607); und
c) Ausführen der Anweisung durch die eine Zentralrecheneinheit ohne Unterbrechung von einer anderen der Zentralrecheneinheiten.

7. Verfahren nach Anspruch 6, wobei das Datenverarbeitungssystem in einem aus einer Vielzahl von Betriebsmodi (3A - 3C) arbeiten kann, das den Schritt des Versehens des Datenverarbeitungssystems mit einem Betriebsmodus (3C) umfaßt, in dem die eine Zentralrecheneinheit (11) die Anweisung ohne Unterbrechung von einer anderen der Zentralrecheneinheiten ausführen kann.

8. Verfahren nach Anspruch 7, bei dem das Ausführen des Modifizierungsschritts durch die eine Zentralrecheneinheit (11) des weiteren folgende Schritte umfaßt: Bilden (604) eines logischen Produkts des Datenelements und des Inhalts eines Maskenregisters, um ein Zwischen-Datenelement zu bilden; und Addieren (605) eines Operanden von einem durch die eine Zentralrecheneinheit (11) in Abhängigkeit von den ausgeführten Anweisungen aus der Hauptspeicherstelle (153) ausgewählten Register zu dem Zwischen-Datenelement.

9. Verfahren nach Anspruch 8, bei dem die zumindest eine Blockieranweisung Konstituentenanweisungen umfaßt, und das des weiteren den Schritt des Sortierens der Konstituentenanweisungen der Blockieranweisung in reservierte Hauptspeicherstellen umfaßt.

10. Verfahren nach Anspruch 6, bei dem die Modifikation des Datenelements umfaßt: Speichern (603) des Datenelements in der einen Zentralrecheneinheit (11); Bilden (604) eines logischen Produkts des Datenelements und des Inhalts eines von der einen Zentralrecheneinheit vorgewählten ersten Registers, um ein kombiniertes Datenelement zu bilden; und Addieren (605) einer Datensignalgruppe aus einem von der einen Zentralrecheneinheit vorgewählten zweiten Register zu dem kombinierten Datenelement, um das modifizierte Datenelement zu bilden.

11. Datenverarbeitungssystem mit zumindest einer Hauptspeichereinheit (15) und einer Vielzahl von Datenverarbeitungseinheiten (11, 12), mit:
a) einer Einrichtung (21) zum Zuführen einer Vielzahl von Anweisungssequenzen zu jeder der Datenverarbeitungseinheiten; und
b) einer Steuerungseinrichtung (22) zum Ausführen einer der Anweisungssequenzen in Abhängigkeit von einer festgelegten Anweisung von einer der Datenverarbeitungseinheiten (11), in dem,
1) wenn die festgelegte Anweisung eine Blockieranweisung ist und die Hauptspeichereinheit (15) nicht blockiert ist, die eine Datenverarbeitungseinheit (11) die Hauptspeichereinheit blockiert und eine andere der Datenverarbeitungseinheiten vom Blockieren der Hauptspeichereinheit abhält, ein Datenelement in der Hauptspeichereinheit modifiziert und die Hauptspeichereinheit-Blockierung freigibt;
2) wenn die festgelegte Anweisung eine Blockieranweisung ist und die Hauptspeichereinheit blockiert ist, der einen Datenverarbeitungseinheit der Zugriff auf den Hauptspeicher verweigert wird; und
3) wenn die festgelegte Anweisung keine Blockieranweisung ist - und selbst wenn die Hauptspeichereinheit blockiert ist -, die eine Datenverarbeitungseinheit ein Datenelement in der Hauptspeichereinheit ohne Blockieren der Hauptspeichereinheit modifiziert.

12. Datenverarbeitungssystem nach Anspruch 11, bei dem die festgelegte Anweisung eine Modifizierungsanweisung ist, bei dem die Vielzahl von Anweisungssequenzen in festgelegten Speicherstellen in der zumindest einen Hauptspeichereinheit zur Ausführung gespeichert ist und bei dem die Ausführung einer der Anweisungssequenzen die Ausführung ohne Unterbrechung von einer anderen der Datenverarbeitungseinheiten ist.

13. Vorrichtung nach Anspruch 12, bei der, wenn die Modifizierungsanweisung eine Blockieranweisung ist, der Datenprozessor (11) das Datenelement durch logisches Kombinieren des Datenelements mit einem in einem Register der einen Datenverarbeitungseinheit gespeicherten Maskensignal modifiziert.

14. Datenverarbeitungssystem nach Anspruch 12, bei dem die Datenverarbeitungseinheit (11) die Anweisungssequenzen in einem Betriebsmodus (3C) ausführt, der sich von einem Benutzermodus (3A) und einem Kernmodus (3B) unterscheidet.

15. Datenverarbeitungssystem nach Anspruch 14, bei dem die Datenverarbeitungseinheit (11) Interrupt-Signale von anderen der Datenverarbeitungseinheiten deaktiviert (601), wenn sich die Datenverarbeitungseinheit in dem Modus befindet.

16. Datenverarbeitungssystem nach Anspruch 14, bei dem das Datenelement (153) in einer Zentralrecheneinheit gespeichert ist, das die eine Anweisungssequenz ausführt, nachdem das Datenelement modifiziert wurde.

17. Datenverarbeitungssystem nach Anspruch 11, bei dem die Vielzahl von Datenverarbeitungseinheiten (11, 12) eine Vielzahl von Zentralrecheneinheiten umfaßt, bei dem die zumindest eine Hauptspeichereinheit (15) eine Vielzahl von Hauptspeichereinheiten ist und bei dem jede der Zentralrecheneinheiten des weiteren aufweist:
a) eine Registereinrichtung, die mit jeder der Zentralrecheneinheiten zum Empfangen von Datenelementen von einer der Hauptspeichereinheiten und zum Speichern der Datenelemente darin verbunden ist;
b) eine Übertragungseinrichtung (19), die mit jeder der Zentralrecheneinheiten zum Übertragen eines Datenelements zwischen einer der Hauptspeichereinheiten und der Registereinheit einer der Zentralrecheneinheiten verbunden ist;
c) eine Kombinierungseinrichtung zum logischen Kombinieren des in der Registereinrichtung gespeicherten übertragenen Datenelements mit einer in einer zweiten Registereinrichtung der einen Zentralrecheneinheit gespeicherten Maskensignalgruppe, um ein modifiziertes Datenelement zu bilden; und
d) eine Blockiereinrichtung, die zum Steuern des Blockierzugriffs auf zumindest ein Datenelement jedem der Hauptspeichereinheiten zugeordnet ist;
wobei die Steuerungseinrichtung eine Ausführungseinrichtung zum Ausführen der festgelegten Anweisung aufweist, die in der Vielzahl von Anweisungssequenzen enthalten ist, welche für jede der Zentralrecheneinheiten vorgesehen sind, sowie eine Blockieranweisung und eine zweite Anweisung enthält, wobei die eine Zentralrecheneinheit zwischen der Blockieranweisung und der zweiten Anweisung auswählt;
wobei, wenn die festgelegte Anweisung eine Blockieranweisung ist und das Datenelement nicht blockiert ist, die Ausführung der Blockieranweisung umfaßt: Veranlassen der Blockiereinrichtung, der einen Zentralrecheneinheit einen Blockierzugriff auf das Datenelement zu gewähren, Blockieren des Datenelements, Verhindern des Blockierzugriffs auf das Datenelement durch eine andere der Zentralrecheneinheiten, wenn keine andere der Zentralrecheneinheiten einen Blockierzugriff auf das Datenelement hat, und wenn der einen Zentralrecheneinheit ein Blockierzugriff gewährt wurde: Modifizieren des Datenelements in der Hauptspeichereinheit und Freigeben der Hauptspeichereinheit von der Blockierung; wobei das Modifizieren und Freigeben des weiteren umfaßt:
1) Veranlassen der Übertragungseinrichtung, das Datenelement an die Registereinheit der einen Zentralrecheneinheit zu übertragen, 2) Veranlassen der Kombinierungseinrichtung, ein modifiziertes Datenelement zu liefern, 3) Veranlassen des modifizierten Datenelements, das Datenelement in der Hauptspeichereinheit zu ersetzen, und 4) Veranlassen der Blockiereinrichtung, einen blockierten Zugriff auf das modifizierte Datenelement zu gestatten, wenn das modifizierte Datenelement das Datenelement in der Hauptspeichereinheit ersetzt hat;
wobei, wenn die festgelegte Anweisung eine Blockieranweisung ist und das Datenelement in der Hauptspeichereinheit blockiert ist, die Ausführung der Blockieranweisung, den Zugriff der Zentralrecheneinheit auf den Hauptspeicher zu verweigern, des weiteren umfaßt: Veranlassen der Blockiereinrichtung, der einen Zentralrecheneinheit den Blockierzugriff auf das Datenelement zu verweigern, wenn eine andere der Zentralrecheneinheiten einen Blockierzugriff auf das Datenelement hat; und
wobei, wenn die festgelegte Anweisung die zweite Anweisung ist, die Ausführung der zweiten Anweisung, die das Modifizieren des Datenelements in der Hauptspeichereinheit ohne Blockieren der Hauptspeichereinheit bewirkt, des weiteren umfaßt: 1) Veranlassen der Blockiereinrichtung, der einen Zentralrecheneinheit einen Nicht-Blockierzugriff auf das Datenelement zu gewähren, 2) Veranlassen der Übertragungseinrichtung, das Datenelement in die Registereinrichtung der einen Zentralrecheneinheit zu übertragen, 3) Veranlassen der Kombinierungseinrichtung, ein modifiziertes Datenelement zu liefern, und 4) Veranlassen des modifizierten Datenelements, das Datenelement in der Hauptspeichereinheit zu ersetzen.

18. Datenverarbeitungssystem nach Anspruch 16, bei dem die eine Zentralrecheneinheit (11) die ausgewählte Anweisung ohne Unterbrechung durch eine andere der Zentralrecheneinheiten ausführt.

19. Datenverarbeitungseinheit nach Anspruch 18, bei der das identifizierte Datenelement in der Registereinrichtung der einen Zentralrecheneinheit gespeichert bleibt, nachdem das modifizierte identifizierte Datenelement in der Hauptspeichereinheit gespeichert wurde.

20. Datenverarbeitungssystem nach Anspruch 19, bei dem durch eine andere der Zentralrecheneinheiten auf nicht blockierte Weise auf das identifizierte Datenelement in der Registereinrichtung der Zentralrecheneinheit zugegriffen werden kann.

21. Datenverarbeitungssystem nach Anspruch 18, bei dem jede der Zentralrecheneinheiten (11, 12) einen Satz von Anweisungen ausführt, wobei der Satz eine Gruppe von privilegierten Anweisungen und eine Gruppe von nicht-privilegierten Anweisungen umfaßt, und bei dem jede der Zentralrecheneinheiten einen ersten Betriebsmodus (3A) zum Ausführen der nicht-privilegierten Anweisungen, einen zweiten Betriebsmodus (3B) zum Ausführen der privilegierten und der nicht-privilegierten Anweisungen und einen dritten Betriebsmodus (3C) zum Ausführen von vordefinierten Anweisungssequenzen aufweist, die die vordefiniert privilegierten und die nicht-privilegierten Anweisungen implementieren, wobei die Blockieranweisung eine vordefinierte Anweisung ist.

22. Datenverarbeitungseinheit nach Anspruch 21, bei der die Zentralrecheneinheit (11) in Abhängigkeit von einem Modussignal in den dritten Betriebsmodus (3C) eintritt, nachdem die Zentralrecheneinheit in Ausführung begriffene Anweisungen vollendet, und Interrupt-Signale von anderen der Zentralrecheneinheiten deaktiviert.

23. Datenverarbeitungssystem nach Anspruch 17, bei dem die Kombinierungseinrichtung eine Vorrichtung zum Addieren des identifizierten Datenelements zu einem in der Registereinrichtung gespeicherten Operanden umfaßt.

24. Datenverarbeitungssystem nach Anspruch 18, bei dem die ausgewählte Anweisung zumindest ein Maskensignal in der Maskensignalgruppe aus einem von der Zentralrecheneinheit in Abhängigkeit von der ausgewählten Anweisung aus der Hauptspeichereinheit ausgewählten Register identifiziert, und
die ausgewählte Anweisung ferner eine Operandensignal-Gruppe aus einem von der Zentralrecheneinheit in Abhängigkeit von der ausgewählten Anweisung aus der Hauptspeichereinheit ausgewählten Register identifiziert,
wobei die Kombinierungseinrichtung das identifizierte Maskensignal logisch mit dem identifizierten Datenelement kombiniert und die identifizierte Operandensignal-Gruppe zu dem identifizierten Datenelement addiert.

25. Datenverarbeitungssystem nach Anspruch 17, bei dem das identifizierte Datenelement dazu verwendet wird, die Zentralrecheneinheiten zu synchronisieren.

## Revendications

1. Appareil pour modifier des éléments d'information se trouvant dans des emplacements d'une mémoire principale (15) d'un système de traitement de données ayant une multiplicité d'unités centrales de traitement (11, 12), chacun desdits emplacements de mémoire se trouvant, soit en condition verrouillée, soit en condition déverrouillée, comportant:
a) des moyens (21) pour fournir à chacune desdites unités centrales de traitement (11) une multiplicité d'instructions à exécuter, au moins une desdites instructions étant une instruction de verrouillage, chacune des instructions de ladite multiplicité d'instructions amenant l'unité centrale de traitement qui exécute ladite instruction à transférer l'un desdits éléments d'information depuis l'un desdits emplacements de la mémoire principale (15) vers ladite unité centrale de traitement (11), à modifier ledit élément d'information, et à transférer ledit élément d'information modifié de nouveau vers ledit emplacement de la mémoire principale.
b) des moyens de verrouillage (152) réagissant à l'exécution de chacune desdites instructions par l'une desdites unités centrales de traitement pour: 1) autoriser ladite une unité centrale de traitement (11) à avoir accès avec verrouillage à l'un (153) desdits emplacements de mémoire principale en plaçant au moins ledit un emplacement de mémoire principale (153 ) dans ladite condition verrouillée si ladite instruction exécutée est une instruction de verrouillage et que ledit un emplacement de mémoire principale se trouve dans ladite condition déverrouillée, 2) interdire à ladite une unité centrale de traitement l'accès à un desdits emplacements de mémoire principale si ladite instruction exécutée est une instruction de verrouillage et que ledit un emplacement de mémoire principale se trouve dans ladite condition verrouillée, et 3) autoriser ladite une unité centrale de traitement à avoir accès sans verrouillage audit un emplacement de mémoire principale, même si ledit emplacement de mémoire principale se trouve dans une condition verrouillée, sans placer ledit un emplacement de mémoire dans ladite condition verrouillée si ladite instruction exécutée n'est pas une instruction de verrouillage:
c) des moyens de transfert (19) pour transférer ledit élément d'information depuis ledit un emplacement de mémoire principale (153) vers ladite une unité centrale de traitement (11) qui exécute ladite instruction;
d) des moyens de traitement (25, 26) pour exécuter ladite modification dudit élément d'information en réponse à ladite instruction exécutée par ladite unité centrale de traitement;
e) lesdits moyens de transfert (19) transférant ledit élément d'information modifié depuis ladite une unité centrale de traitement vers ledit un emplacement de mémoire principale; et
f) si ladite instruction exécutée est une instruction de verrouillage, lesdits moyens de verrouillage (152) plaçant ledit un emplacement de mémoire principale (153) dans ladite condition déverrouillée après ledit transfert dudit élément d'information modifié vers ledit un emplacement de mémoire principale par ladite unité centrale de traitement qui a exécuté l'instruction de verrouillage.

2. Appareil de modification d'éléments d'information selon la revendication 1, dans lequel ladite une unité centrale de traitement (11) est capable de fonctionner suivant une multiplicité de modes de fonctionnement privilégiés (3B, 3C), et ladite une unité centrale de traitement fonctionne selon l'un desdits modes privilégiés de fonctionnement en réponse à des instructions sélectionnées exécutées par l'une desdites unités centrales de traitement.

3. Appareil de modification d'éléments d'information selon la revendication 1, dans lequel une seconde unité centrale de traitement (12) peut avoir accès sans verrouillage audit emplacement de mémoire principale (153) lorsque l'accès avec verrouillage n'est pas permis.

4. Appareil de modification d'éléments d'information selon la revendication 1, dans lequel au moins une instruction de verrouillage identifie un élément d'information dans ledit emplacement de mémoire principale, lesdits moyens de traitement modifiant ledit élément d'information en réponse à ladite instruction de verrouillage.

5. Appareil selon la revendication 1, dans lequel lesdits moyens de traitement comportent:
des premiers moyens de stockage pour emmagasiner ledit élément d'information à modifier dans ladite unité centrale de traitement;
des moyens logiques pour former un produit logique dudit élément, d'information et du contenu d'un premier registre présélectionné par ladite une unité centrale de traitement pour former un élément d'information combiné; et des moyens d'addition pour former ledit élément d'information modifié en ajoutant audit élément d'information combiné un groupe de signaux se trouvant dans un second registre présélectionné par ladite une unité centrale de traitement.

6. Procédé de modification d'un élément d'information dans une unité de mémoire principale (15) d'un système de traitement de données, ladite unité de mémoire principale ayant des emplacemments, lesdits emplacements se trouvant soit dans une condition verrouillée, soit dans une condition déverrouillée, ledit système de traitement de données ayant une multiplicité d'unités centrales de traitement (11, 12) et ladite unité de mémoire principale (15), comportant les étapes consistant:
a) à fournir à chacune desdites unités centrales de traitement une multiplicité d'instructions à exécuter, au moins l'une desdites instructions étant une instruction de verrouillage, l'exécution de chacune des instructions de ladite multiplicité d'instructions amenant l'unité centrale de traitement qui exécute ladite instruction à transférer l'un desdits éléments d'information depuis une emplacement de ladite unité de mémoire principale vers ladite unité centrale de traitement, à modifier ledit élément d'information et à transférer ledit élément de données modifié de nouveau vers ledit emplacement de mémoire principale;
b) à réagir à chacune desdites instructions exécutées par l'une desdites unités centrales de traitement en: 1) autorisant (601) ladite une unité centrale de traitement (11) à avoir un accès avec verrouillage audit emplacement, de mémoire principale (153) en plaçant ledit emplacement de mémoire principale dans ladite condition verrouillée si ladite instruction exécutée est une instruction de verrouillage et que ledit emplacement de mémoire principale se trouve dans ladite condition déverrouillée, 2) interdisant à ladite une unité centrale de traitement l'accès audit emplacement de mémoire principale si ladite instruction exécutée est une instruction de verrouillage et que ledit emplacement de mémoire principale se trouve dans ladite condition verrouillée, 3) autorisant ladite une unité centrale de traitement à avoir un accès sans verrouillage audit emplacement de mémoire principale, même si ledit emplacement de mémoire se trouve dans une condition verrouillée, sans placer ledit un emplacement de mémoire dans ladite condition verrouillée si ladite instruction exécutée n'est pas une instruction de verrouillage, et (4) faisant modifier ledit élément d'information à transférer (602) depuis ledit emplacement de mémoire principale vers ladite une unité centrale de traitement si ladite une unité centrale de traitement a été autorisée à accéder audit emplacement de mémoire principale;
ladite unité centrale de traitement réagissant, en outre, à ladite instruction exécutée en transférant (606) ledit élément d'information modifié depuis ladite une unité centrale de traitement vers ledit emplacement de mémoire principale, et, si ladite instruction exécutée est une instruction de verrouillage, plaçant (607) ledit emplacement de mémoire principale (153) dans ladite condition déverrouillée; et
c) à faire exécuter ladite instruction par ladite une unité centrale de traitement sans interruption de la part d'une autre unité parmi lesdites unités centrales de traitement.

7. Procédé selon la revendication 6, ledit système de traitement de données étant capable de fonctionner suivant un mode parmi une multiplicité de modes de fonctionnement (3A-3C), comportant l'étape consistant à doter ledit système de traitement de données d'un mode de fonctionnement (3C) dans lequel ladite unité centrale de traitement (11) peut exécuter ladite instruction sans interruption de la part d'une autre unité parmi lesdites unités centrales de traitement.

8. Procédé selon la revendication 7, dans lequel l'exécution de ladite étape de modification par ladite une unité centrale de traitement (11) comprend, en outre, les étapes consistant: à former (604) un produit logique dudit élément d'information et du contenu d'un registre de masques pour former un élément d'information intermédiaire; et à ajouter (605) audit élément d'information intermédiaire un opérande en provenance d'un registre sélectionné à partir dudit emplacement de mémoire principale (153) par ladite une unité centrale de traitement (11) en réponse auxdites instructions exécutées.

9. Procédé selon la revendication 8, dans lequel ladite instruction de verrouillage au nombre d'au moins un comporte des instructions constitutives et comportant, en outre, une étape consistant à trier ledites instructions constitutives de ladite instruction de verrouillage dans des emplacements de mémoire principale réservés.

10. Procédé selon la revendication 6, dans lequel la modification dudit élément d'information consiste: à emmagasiner (603) ledit élément d'information dans ladite une unité centrale de traitement (11); à former (604) un produit logique dudit élément d'information et du contenu d'un premier registre présélectionné par ladite une unité centrale de traitement pour former un élément d'information combiné; et à ajouter (605) audit élément d'information combiné un groupe de signaux de données en provenance d'un second registre présélectionné par ladite une unité centrale de traitement pour former ledit élément d'information modifié.

11. Système de traitement de données comprenant au moins une unité de mémoire principale (15) et une multiplicité d'unités de traitement de données (11, 12) comportant:
a) des moyens (21) pour fournir à chacune desdites unités de traitement de données une multiplicité de séquences d'instructions; et
b) des moyens de commande (22) pour exécuter l'une desdites séquences d'instructions en réponse à une instruction prédéterminée en provenance de l'une desdites unités de traitement de données (11), dans lequel
1) si ladite instruction prédéterminée est une instruction de verrouillage et que ladite unité de mémoire principale (15) n'est pas verrouillée, ladite une unité de traitement de données (11): verrouille ladite unité de mémoire principale et empêche une autre unité parmi lesdites unités de traitement de données de verrouiller ladite unité de mémoire principale, modifie un élément d'information se trouvant dans ladite unité de mémoire principale, et libère ledit verrouillage de l'unité de mémoire principale;
2) si ladite instruction prédéterminée est une instruction de verrouillage et que ladite unité de mémoire principale est verrouillée, il est interdit à ladite une unité de traitement de données d'accéder à ladite mémoire principale; et
3) si ladite instruction prédéterminée n'est pas une instruction de verrouillage, et même si ladite unité de mémoire principale est verrouillée, ladite unité de traitement de données modifie un élément d'information se trouvant dans ladite unité de mémoire principale sans verrouiller ladite unité de mémoire principale.

12. Système de traitement de données selon la revendication 11, dans lequel ladite instruction prédéterminée est une instruction de modification et dans lequel ladite multiplicité de séquences d'instructions sont emmagasinées dans des emplacements prédéterminés de l'unité de mémoire principale au nombre d'au moins un en vue de leur exécution, et dans lequel ladite exécution d'une desdites séquences d'instructions est une exécution sans interruption de la part d'une autre unité parmi lesdites unités de traitement de données.

13. Appareil selon la revendication 12, dans lequel, si ladite instruction de modification est une instruction de verrouillage, ledit processeur de données (11) modifie ledit élément d'information en effectuant une combinaison logique dudit élément d'information avec un signal de masquage emmagasiné dans un registre de ladite une unité de traitement de données.

14. Système de traitement de données selon la revendication 12, dans lequel ladite unité de traitement de données (11) exécute lesdites séquences d'instructions selon un mode de fonctionnement (3C) différent d'un mode utilisateur (3A) et d'un mode noyau (3B).

15. Système de traitement de données selon la revendication 14, dans lequel ladite unité de traitement de données (11) désactive (601) des signaux d'interruption en provenance d'autres unités parmi lesdites unités de traitement de données lorsque ladite unité de traitement de données se trouve dans ledit mode.

16. Système de traitement de données selon la revendication 14, dans lequel ledit élément d'information est emmagasiné dans une unité centrale de traitement exécutant ladite une séquence d'instructions après la modification dudit élément d'information.

17. Système de traitement de données selon la revendication 11, dans lequel ladite multiplicité d'unités de traitement de données (11, 12) constituent une multiplicité d'unités centrales de traitement, dans lequel ladite unité de mémoire principale (15) au numéro d'au moins un est une multiplicité d'unités de mémoire principale, et dans lequel chacune desdites unités centrales de traitement comporte en outre:
a) des moyens formant registre reliés à chacune desdites unités centrales de traitement pour recevoir des éléments d'information de chacune desdites unités de mémoire principale et pour y emmagasiner lesdits éléments d'information;
b) des moyens de transfert (19) reliés a chacune desdites unités centrales de traitement pour transférer un élément d'information entre une desdites unités de mémoire principale et lesdits moyens formant registre de l'une desdits unités centrales de traitement;
c) des moyens de combinaison pour réaliser une combinaison logique dudit élément d'information transféré emmagasiné dans lesdits moyens formant registre avec un groupe de signaux de masquage emmagasiné dans de seconds moyens formant registre de ladite une unité centrale de traitement pour former un élément d'information modifié; et
d) des moyens de verrouillage associés à chacune desdites unités de mémoire principale pour commander l'accès avec: verrouillage à au moins un élément d'information; et
dans lequel lesdits moyens de commande comprennent des moyens d'exécution pour exécuter ladite instruction prédéterminée comprise dans ladite multiplicité de séquences
d'instructions prévues pour chacune desdites unités centrales de traitement et qui comprend une instruction de verrouillage et une seconde instruction, ladite une unité centrale de traitement opérant une sélection, soit de ladite instruction de verrouillage, soit de ladite seconde instruction;
dans lequel, si ladite instruction prédéterminée est une instruction de verrouillage et que ledit élément d'information n'est pas verrouillé, l'exécution de ladite instruction de verrouillage: amenant lesdits moyens de verrouillage à autoriser ladite unité centrale de traitement à avoir accès avec verrouillage audit élément d'information, verrouillant ledit élément d'information, interdisant l'accès avec verrouillage audit élément d'information de la part d'une autre unité parmi lesdites unités centrales de traitement lorsqu'aucune autre unité parmi lesdites unités centrales de traitement n'a accès avec verrouillage audit, élément d'information et, lorsque ladite une unité centrale de traitement a été autorisée à avoir un accès avec verrouillage, modifiant ledit élément d'information se trouvant dans ladite unité de mémoire principale et libérant ladite unité de mémoire principale dudit verrouillage; ladite modification et ladite libération consistant, en outre:
1) à amener lesdits moyens de transfert à transférer ledit élément d'information vers lesdits moyens formant registre de ladite une unité centrale de traitement,
2) à amener lesdits moyens de combinaison à fournir un élément d'information modifié, 3) à amener ledit élément d'information modifié à replacer ledit élément d'information se trouvant dans ladite unité de mémoire principale et 4) à amener lesdits moyens de verrouillage à autoriser l'accès avec verrouillage audit élément d'information modifié lorsque ledit élément d'information modifié a remplacé ledit élément d'information se trouvant dans ladite unité de mémoire principale;
dans lequel, si ladite instruction prédéterminée est une instruction de verrouillage et que ledit élément d'information se trouvant dans ladite unité de mémoire principale est verrouillé, ladite exécution de ladite instruction de verrouillage pour interdire l'accès à ladite mémoire principale par ladite unité centrale de traitement consiste en outre : à amener lesdits moyens de verrouillage à interdire à ladite une unité centrale de traitement l'accès avec verrouillage audit élément d'information lorsqu'une autre unité parmi lesdites unités centrales de traitement a accès avec verrouillage audit élément d'information; et
dans lequel, si ladite instruction prédéterminée est ladite seconde instruction, ladite exécution de ladite seconde instruction entraînant ladite modification dudit élément d'information se trouvant dans ladite unité de mémoire principale sans verrouillage de ladite unité de mémoire principale consiste, en outre: 1) à amener lesdits moyens de verrouillage à autoriser ladite une unité centrale de traitement à avoir un accès sans verrouillage audit élément d'information, 2) à amener lesdits moyens de transfert à transférer ledit élément d'information vers lesdits moyens formant registre de ladite une unité centrale de traitement, 3) à amener lesdits moyens de combinaison à fournir un élément d'information modifié, et 4) à amener ledit élément d'information modifié à remplacer ledit élément d'information se trouvant dans ladite unité de mémoire principale.

18. Système de traitement de données selon la revendication 16, dans lequel ladite une unité centrale de traitement (11) exécute ladite instruction sélectionnée sans interruption de la part d'une autre unité parmi lesdites unités centrales de traitement.

19. Unité de traitement de données selon la revendication 18, dans laquelle ledit élément d'information identifié reste emmagasiné dans lesdits moyens formant registre de ladite une unité centrale de traitement après que ledit élément d'information identifié modifié a été emmagasiné dans ladite unité de mémoire principale,

20. Système de traitement de données selon la revendication 19, dans lequel il peut être accédé de façon non verrouillée audit élément d'information identifié se trouvant dans lesdits moyens formant registre de ladite unité centrale de traitement par une autre unité parmi lesdites unités centrales de traitement.

21. Système de traitement de données selon la revendication 18, dans lequel chacune desdites unités centrales de traitement (11, 12) exécute un ensemble d'instructions, ledit ensemble comprenant un groupe d'instructions privilégiées et un groupe d'instructions non privilégiées, et chacune desdites unités centrales de traitement ayant un premier mode de fonctionnement (3A) pour exécuter lesdites instructions non privilégiées, un second mode de fonctionnement (3B) pour exécuter lesdites instructions privilégiées et lesdites instructions non privilégiées, et un troisième mode de fonctionnement (3C) pour exécuter des séquences prédéfinies d'instructions mettant en oeuvre des instructions prédéfinies parmi lesdites instructions privilégiées et lesdites instructions non privilégiées, ladite instruction de verrouillage étant une instruction prédéfinie.

22. Unité de traitement de données selon la revendication 21, dans laquelle ladite unité centrale de traitement (11) entre dans ledit troisième mode de fonctionnement (3C) en réponse à un signal de mode après que ladite unité centrale de traitement à terminé les instructions en cours d'exécution et qu'elle a désactivé des signaux d'interruption en provenance d'autres unités parmi lesdites unités centrales de traitement.

23. Système de traitement de données selon la revendications 17, dans lequel lesdits moyens de combinaison comprennent des appareils pour ajouter ledit élément d'information identifié à un opérande emmagasiné dans lesdits moyens formant registre.

24. Système de traitement de données selon la revendication 18, dans lequel ladite instruction sélectionnée identifie au moins un signal de masquage dudit groupe de signaux de masquage à partir d'un registre sélectionné dans ladite unité de mémoire principale par ladite unité centrale de traitement en réponse à ladite instruction sélectionnée; et
ladite instruction sélectionnée identifie, en outre, un groupe de signaux d'opérande à partir d'un registre sélectionné dans ladite unité de mémoire principale par ladite unité centrale de traitement en réponse à ladite instruction sélectionnée;
lesdits moyens de combinaison combinant logiquement ledit signal de masquage identifié avec ledit élément d'information identifié et ajoutant ledit groupe de signaux d'opérande identifié audit élément d'information identifié.

25. Système de traitement de données selon la revendication 17, dans lequel ledit élément d'information identifié est utilisé pour synchroniser lesdites unités centrales de traitement.
